# EUROPEAN PATENT APPLICATION

(11) **EP 3 709 230 A1**
(43) Date of publication of application: **16.09.2020**
(21) Application number: 18928642.0
(22) Date of filing: 30.07.2018
(51) Int. Cl.: G06N 99/00, G06Q 10/04, G06Q 30/06

(54) **ASSESSMENT SYSTEM, ASSESSMENT METHOD, AND PROGRAM**

(71) Applicant: Rakuten, Inc., Tokyo 158-0094 (JP)
(72) Inventor: TOMODA, Kyosuke, Tokyo 158-0094 (JP)
(74) Representative: EIP
(86) International application number: PCT/JP2018/028454
(87) International publication number: WO 2020/026302

(57) **Abstract**

Provided are a determination system, a determination method, and a program, which are capable of determining a determination validity of a machine learning model in operation in a timely manner. An unauthorized order determination device (12) executes estimation processing relating to the input data, based on an output produced when a plurality of elements included in input data, on which the estimation processing is to be performed, are input to a first machine learning model. A model generation device (22) executes learning of a second machine learning model based on a part of the plurality of elements included in the input data and known result data of the input data. The model generation device (22) determines a determination validity of the first machine learning model based on an output of the second machine learning model after execution of the learning.

## Description

### Technical Field

The present invention relates to a determination system, a determination method, and a program.

### Background Art

In Patent Literature 1, there is described a matter of determining an unauthorized order level of a user operation based on a history of an unauthorized order determination score of an operation that is of the same type as the user operation.

### Citation List

### Patent Literature

[PTL 1] JP 6204637 B1

### Summary of Invention

### Technical Problem

The inventors of the present invention have considered a system configured to use a machine learning model to estimate a possibility that an order transmitted to an electronic commerce system is an unauthorized order.

In such a system, from the viewpoint of usability, it is required to suppress an order response time. Moreover, it is not desired that a criteria for determining whether or not an order is an unauthorized order be frequently changed. Further, when it is considered that the trends of unauthorized orders are transient, it is not desired to change the criteria each time the trends change. In view of this situation, in place of continually executing additional learning based on new learning data for a machine learning model in operation, the inventors of the present invention are attempting to estimate the possibility that an order is an unauthorized order by continuously using for a certain period of time a machine learning model having fixed learning content.

However, in this case, the latest trends regarding unauthorized orders are not reflected in the machine learning model in operation, and hence a determination validity of the machine learning model may decrease. Therefore, it is desired that the determination validity of the machine learning model in operation be determined in a timely manner so that the decrease in the determination validity can be handled in some way at an appropriate time.

In this case, learning based on new learning data may be executed on a copy of the machine learning model in operation, and the determination validity of the machine learning model in operation may be determined based on the output of the copy that has learned the new learning data. For example, when there is a difference in a tendency of output between the machine learning model in operation and the learned copy, it may be determined that the determination validity of the machine learning model in operation has decreased.

However, when the number of elements of the data input to the copy of the machine learning model in operation is large, the output response to a trend generated for a small number of elements is sluggish, and it may not be possible to determine the determination validity of the machine learning model in operation in a timely manner based on the output of the copy that has executed learning.

In this case, even when the technology described in Patent Literature 1 is used, the determination validity of the machine learning model in operation cannot be determined in a timely manner.

The matters described above are not limited to the estimation of the possibility that an order is an unauthorized order, and are generally applicable to cases in which estimation processing is performed through use of a machine learning model.

The present invention has been made in view of the above problems. It is an object of the present invention to provide a determination system, a determination method, and a program, which are capable of determining a determination validity of a machine learning model in operation in a timely manner.

### Solution to Problem

In order to solve the problem described above, according to one embodiment of the present invention, there is provided a determination system, including: estimation processing execution means for executing estimation processing relating to the input data, based on an output produced when a plurality of elements included in input data, on which the estimation processing is to be performed, are input to a first machine learning model; learning execution means for executing learning of a second machine learning model based on a part of the plurality of elements included in the input data and known result data of the input data; and determining means for determining a determination validity of the first machine learning model based on an output of the second machine learning model after execution of the learning.

In one aspect of the present invention, the learning execution means is further configured to execute learning of a third machine learning model based on the plurality of elements included in the input data and the known result data of the input data, and the estimation processing execution means is configured to execute the estimation processing relating to new input data, when it is determined that the first machine learning model is not valid, based on an output produced when the plurality of elements included in the new input data are input to the third machine learning model after execution of the learning.

Alternatively, the learning execution means is further configured to execute learning of a third machine learning model based on the plurality of elements included in the input data and the known result data of the input data, and the estimation processing execution means is configured to execute the estimation processing relating to new input data, when it is determined that the first machine learning model is not valid, based on an output produced when the plurality of elements included in the new input data are input to any one of the first machine learning model and the third machine learning model to be determined in accordance with the new input data.

Alternatively, the determination system further includes trend identification means for identifying a strength of a trend in the output of the second machine learning model, wherein the learning execution means is further configured to execute learning of a third machine learning model based on the plurality of elements included in the input data and the known result data of the input data, and wherein the estimation processing execution means is configured to execute the estimation processing relating to new input data, when it is determined that the first machine learning model is not valid, based on a value obtained by adding a weighting corresponding to the strength of the trend to a value indicating an output produced when the plurality of elements included in the new input data are input to the third machine learning model after execution of the learning and a value indicating an output produced when the plurality of elements are input to the first machine learning model.

In this case, the determination means may determine the determination validity of the first machine learning model based on a difference between an output of the third machine learning model after execution of the learning and an output of the second machine learning model produced when a part of the inputs to the third machine learning model is input to the second machine learning model.

Further, in one aspect of the present invention, the estimation processing execution means is configured to execute the estimation processing relating to new input data, when it is determined that the first machine learning model is not valid, based on an output produced when a part of the plurality of elements included in the new input data is input to a fourth machine learning model.

Further, in one aspect of the present invention, the determination means is configured to determine the determination validity of the first machine learning model based on a difference between an output of the second machine learning model before execution of the learning and an output of the second machine learning model after execution of the learning.

Further, according to one embodiment of the present invention, there is provided a determination method, including the steps of: executing estimation processing relating to new input data, based on an output produced when a plurality of elements included in input data on which the estimation processing is to be performed are input to a first machine learning model; executing learning of a second machine learning model based on a part of the plurality of elements included in the input data and known result data of the input data; and determining a determination validity of the first machine learning model based on an output of the second machine learning model after execution of the learning.

Further, according to one embodiment of the present invention, there is provided a program for causing a computer to execute the procedures of : executing estimation processing relating to the input data, based on an output produced when a plurality of elements included in input data on which the estimation processing is to be performed are input to a first machine learning model; executing learning of a second machine learning model based on a part of the plurality of elements included in the input data and known result data of the input data; and determining a determination validity of the first machine learning model based on an output of the second machine learning model after execution of the learning.

### Brief Description of Drawings

FIG. 1 is a diagram for illustrating an example of an overall configuration of an unauthorized order determination system according to an embodiment of the present invention.
FIG. 2 is a diagram for illustrating an example of operations according to an embodiment of the present invention.
FIG. 3 is a table for showing an example of order data.
FIG. 4 is a table for showing an example of learning data.
FIG. 5 is a table for showing an example of evaluation data.
FIG. 6 is a table for showing an example of estimation result data.
FIG. 7 is a table for showing an example of result management data.
FIG. 8 is a diagram for illustrating an example of an unauthorized order confirmation screen.
FIG. 9 is a table for showing an example of learning data.
FIG. 10 is a diagram for illustrating an example of a structure of a machine learning model stored in a model generation device according to an embodiment of the present invention.
FIG. 11 is a functional block diagram for illustrating an example of functions to be implemented by the model generation device according to an embodiment of the present invention.
FIG. 12 is a diagram for illustrating an example of a data structure of correspondence data.
FIG. 13 is a diagram for illustrating an example of a data structure of trend data.
FIG. 14 is a functional block diagram for illustrating an example of functions to be implemented by a score value determination device according to an embodiment of the present invention.
FIG. 15 is a flowchart for illustrating an example of a flow of processing to be performed by the model generation device according to an embodiment of the present invention.

### Description of Embodiments

Now, an embodiment of the present invention is described with reference to the drawings.

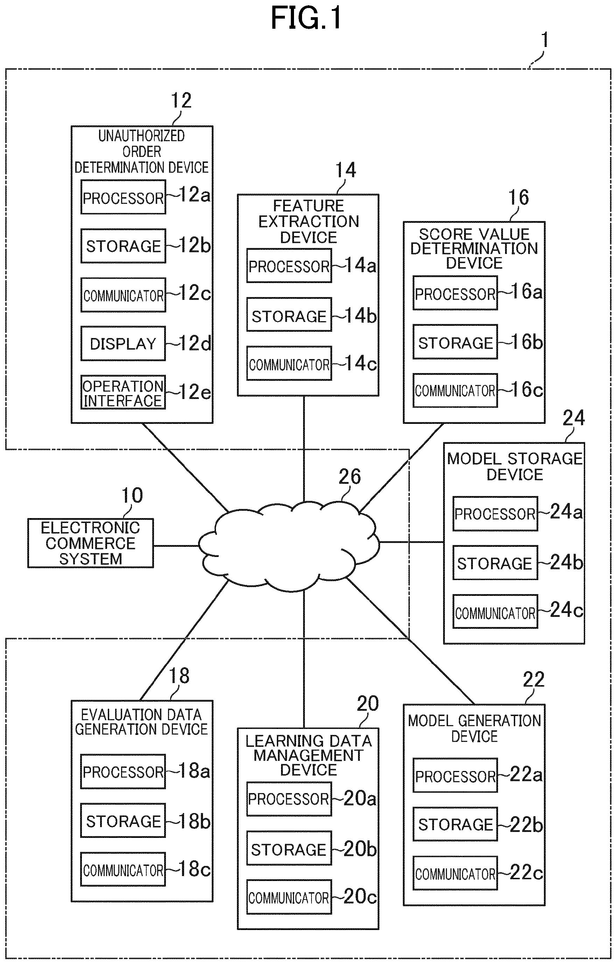

FIG. 1 is a diagram for illustrating an example of an overall configuration of an unauthorized order determination system 1 according to an embodiment of the present invention. As illustrated in FIG. 1, the unauthorized order determination system 1 of this embodiment includes an unauthorized order determination device 12, a feature extraction device 14, a score value determination device 16, an evaluation data generation device 18, a learning data management device 20, a model generation device 22, and a model storage device 24. Those devices are connected to a computer network 26, for example, the Internet, and can communicate to and from each other.

Further, the unauthorized order determination system 1 is communicably connected to the electronic commerce system 10 via the computer network 26. In this case, the electronic commerce system 10 is, for example, a computer system configured to process requests for ordering, shipping, payment, and the like of products and services from users.

In this embodiment, the unauthorized order determination device 12 is, for example, a computer configured to determine whether or not an order for a product or service transmitted to the electronic commerce system 10 is an unauthorized order. The unauthorized order determination device 12 of this embodiment is also configured to generate estimation result data indicating a degree of possibility that an order is an unauthorized order. The unauthorized order determination device 12 of this embodiment includes a processor 12a, a storage 12b, a communicator 12c, a display 12d, and an operation interface 12e.

In this embodiment, the feature extraction device 14 is, for example, a computer configured to extract a feature associated with an order for a product or service transmitted to the electronic commerce system 10. The feature extraction device 14 of this embodiment includes a processor 14a, a storage 14b, and a communicator 14c.

In this embodiment, the score value determination device 16 is, for example, a computer configured to determine a score value associated with the possibility that an order for a product or service transmitted to the electronic commerce system 10 is an unauthorized order. The score value determination device 16 of this embodiment includes a processor 16a, a storage 16b, and a communicator 16c.

In this embodiment, the evaluation data generation device 18 is, for example, a computer configured to generate evaluation data to be used by the unauthorized order determination device 12 to generate estimation result data. The evaluation data generation device 18 of this embodiment includes a processor 18a, a storage 18b, and a communicator 18c.

In this embodiment, the learning data management device 20 is, for example, a computer configured to manage learning data to be used in the learning of a machine learning model generated by the model generation device 22. The learning data management device 20 of this embodiment includes a processor 20a, a storage 20b, and a communicator 20c.

In this embodiment, the model generation device 22 is, for example, a computer configured to execute learning of a machine learning model using learning data managed by the learning data management device 20. A machine learning model (learned model), based on which learning using learning data has been executed, is stored in the model storage device 24. The model generation device 22 of this embodiment includes a processor 22a, a storage 22b, and a communicator 22c.

The machine learning model in this embodiment is implemented based on, for example, a random forest. Implementation of the machine learning model in this embodiment is not particularly limited, and the machine learning model may also be implemented based on an algorithm other than a random forest.

In this embodiment, the model storage device 24 is, for example, a computer configured to store a learned model generated by the model generation device 22. The score value determination device 16 acquires a learned model stored in the model storage device 24, and determines a score value by using the acquired learned model. The model storage device 24 of this embodiment includes a processor 24a, a storage 24b, and a communicator 24c.

The processors 12a, 14a, 16a, 18a, 20a, 22a, and 24a are program control devices, for example, a central processing unit (CPU) . The processors 12a, 14a, 16a, 18a, 20a, 22a, and 24a operate in accordance with a program installed in the unauthorized order determination device 12, the feature extraction device 14, the score value determination device 16, the evaluation data generation device 18, the learning data management device 20, the model generation device 22, and the model storage device 24, respectively.

The storages 12b, 14b, 16b, 18b, 20b, 22b, and 24b are each, for example, a storage element such as a read-only memory (ROM) or a random-access memory (RAM), or a hard disk drive.

The communicators 12c, 14c, 16c, 18c, 20c, 22c, and 24c are each, for example, a communication interface such as a network board or a wireless local area network (LAN) module.

The display 12d is, for example, a display such as a liquid crystal display or an organic EL display.

The operation interface 12e is, for example, a user interface, such as a mouse, a keyboard, a touch pad, and the like for outputting to the processor 12a input data corresponding to an operation input.

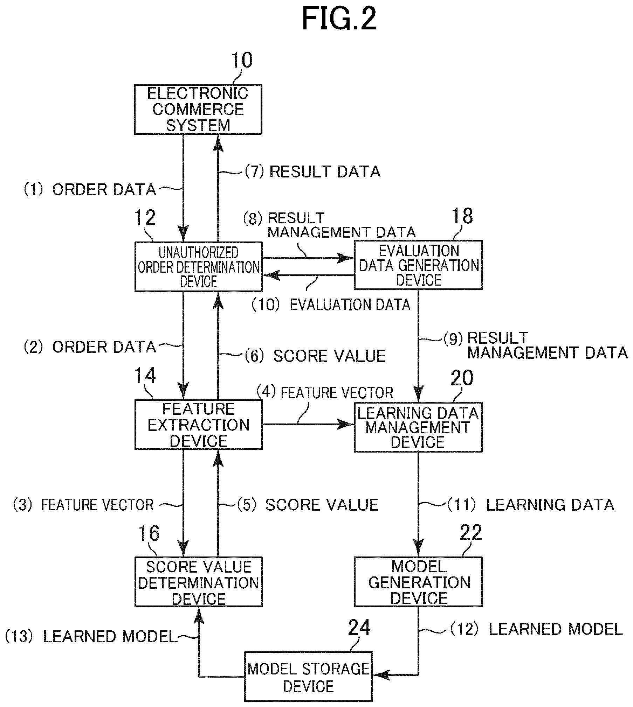

There is now described an example of operations in this embodiment with reference to FIG. 2.

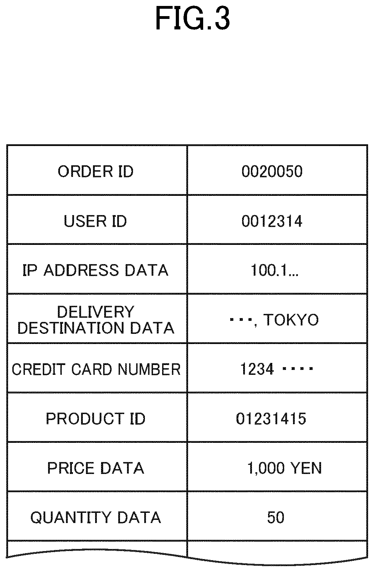

In this embodiment, for example, when an order to be transmitted to the electronic commerce system 10 is generated, order data like that shown in FIG. 3 is transmitted from the electronic commerce system 10 to the unauthorized order determination device 12 (refer to Step (1) of FIG. 2).

The order data is, for example, data indicating an order for a product or service to be transmitted to the electronic commerce system 10. As shown in FIG. 3, the order data includes an order ID, a user ID, IP address data, delivery destination data, a credit card number, a product ID, price data, quantity data, and the like.

The order ID is, for example, identification information on the order indicated by the order data. The user ID is, for example, identification information on the user of the electronic commerce system 10 who performed the order indicated by the order data. The IP address data is, for example, data indicating an IP address of a terminal used by the user to perform the order. The delivery destination data is data indicating, for example, the address of the delivery destination of the ordered product or service. The credit card number data is, for example, data indicating a credit card number used to settle the order. The product ID is, for example, identification information on the ordered product or service. The price data is, for example, data indicating the price of the ordered product or service. The quantity data is, for example, data indicating the quantity of the ordered product or service.

There is now described determination of whether or not an order associated with order data having the order ID 0020050 shown in FIG. 3 is an unauthorized order, and estimation of the possibility that the order is an unauthorized order. In the following description, the order data having the order ID 0020050 shown in FIG. 3 is referred to as "target order data".

The unauthorized order determination device 12 transmits the target order data to the feature extraction device 14 (refer to Step (2) of FIG. 2).

The feature extraction device 14 generates a feature vector representing a feature associated with the target order data, based on, for example, the target order data and past order data stored in the feature extraction device 14. Data representing a comparison result between a value of a predetermined attribute extracted from the target order data and the value of that attribute in the past order data stored in the feature extraction device 14 maybe generated. In this case, from among the past order data stored in the feature extraction device 14, order data having the same user ID as that of the target order data may be identified. Then, data representing the comparison result between the value of the predetermined attribute extracted from the target order data and the value of the attribute in the identified order data may be generated. The feature vector associated with the target order data may also be generated based on the value of the target order data and data representing the comparison result.

The feature vector associated with the target order data, which is associated with the order ID included in the target order data, is transmitted from the feature extraction device 14 to the score value determination device 16 (refer to Step (3) of FIG. 2). The feature vector is also transmitted from the feature extraction device 14 to the learning data management device 20 (refer to Step (4) of FIG. 2) . The transmission of the feature vector from the feature extraction device 14 to the learning data management device 20 may be performed asynchronously with the transmission of the feature vector to the score value determination device 16.

Then, the score value determination device 16 determines the score value associated with the feature vector, that is, the score value associated with the target order data, based on an output produced when the feature vector received from the feature extraction device 14 is input to the learned model. For example, a larger score value may be determined for an order that has a higher possibility of being an unauthorized order. The score value to be determined may also be a real number. The learned model may also output the score value itself.

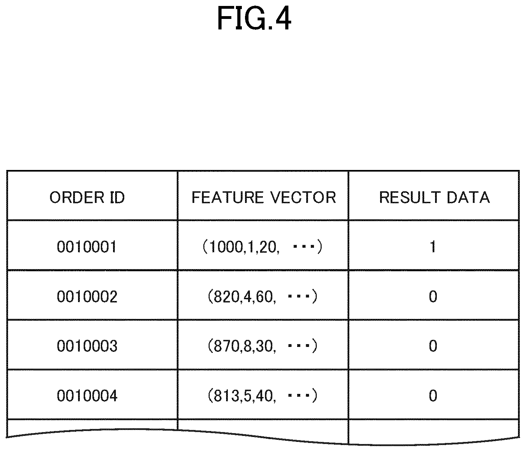

FIG. 4 is a table for showing an example of learning data. The learned model to which the feature vector associated with target order data is input has learned the learning data shown in FIG. 4. As shown in FIG. 4, the learning data includes, for example, an order ID, a feature vector, and result data.

As the order ID included in the learning data, for example, the order ID of the order data is set. As the feature vector included in the learning data, a feature vector generated based on that order data is set. The result data included in the learning data is data indicating the determination result as to whether or not the order associated with the order data is an unauthorized order. In this embodiment, for example, 1 is set as the result data value for an order determined to be an unauthorized order, and 0 is set as the result data value for an order determined not to be an unauthorized order. As described later, in this embodiment, the result data value is determined by the unauthorized order determination device 12 or is set by the operator of the unauthorized order determination device 12.

It is not required for all elements included in the learning data shown in FIG. 4 to be used for the learning by the machine learning model. For example, supervised learning may be executed in which the feature vector included in the learning data is used as input data and the result data included in the learning data is used as training data. In this case, the order ID is not used for the learning by the machine learning model.

The score value determination device 16 transmits the score value associated with the target order data, which is associated with the order ID included in the target order data, to the feature extraction device 14 (refer to Step (5) of FIG. 2).

The feature extraction device 14 transmits the score value received from the score value determination device 16 and associated with the order ID included in the target order data to the unauthorized order determination device 12 (refer to Step (6) of FIG. 2). The range of score value determined by the score value determination device 16 may be from 0 or more to 1 or less. The feature extraction device 14 may also multiply the score value by 1000 and transmit the multiplied score value to the unauthorized order determination device 12. In this case, the score value received by the unauthorized order determination device 12 is from 0 or more to 1,000 or less.

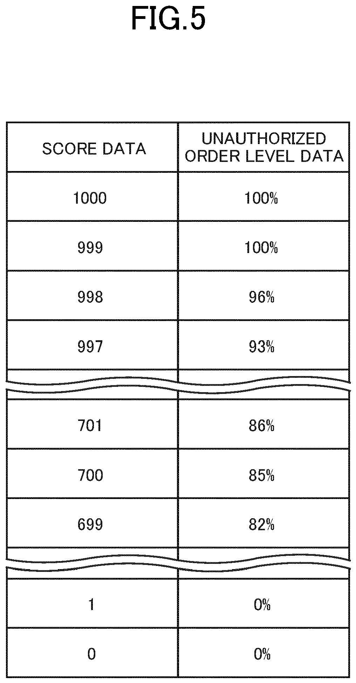

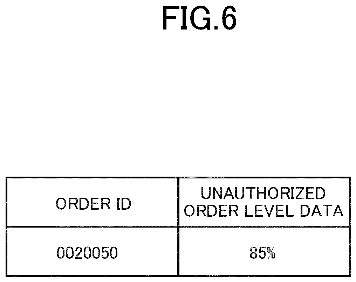

The unauthorized order determination device 12 generates the estimation result data associated with the target order data shown in FIG. 6 based on the received score value and the evaluation data generated by the evaluation data generation device 18 shown in FIG. 5.

FIG. 5 is a table for showing an example of the evaluation data generated by the evaluation data generation device 18. The evaluation data shown in FIG. 5 includes score data and unauthorized order level data. The score data included in the evaluation data is, for example, data indicating a score value. The unauthorized order level data included in the evaluation data is, for example, data indicating the degree of possibility that the order associated with the order data of that score value is an unauthorized order. The values of the unauthorized order level data shown in FIG. 5 are expressed as a percentage. The evaluation data shown in FIG. 5 is associated with each of a plurality of score values.

In this embodiment, the evaluation data shown in FIG. 5 is stored in the unauthorized order determination device 12. The unauthorized order determination device 12 generates the estimation result data based on the score value determined for the order data and the evaluation data stored by the unauthorized order determination device 12.

The estimation result data shown in FIG. 6 includes, for example, an order ID and unauthorized order level data. For example, it is assumed that the score value associated with the target order data having the order ID 0020050 is 700. In this case, the value of the unauthorized order level data associated with the score data having a value of 700 in the evaluation data shown in FIG. 5 is 85%. Therefore, in such a case, 85% is set as the value of unauthorized order level data included in the estimation result data in which 0020050 is set as the order ID. In this way, in this embodiment, the degree of the possibility that the order associated with the target order data is an unauthorized order is estimated.

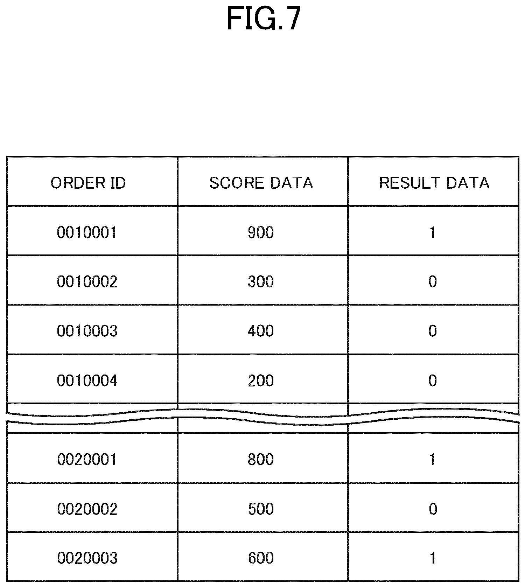

In this embodiment, for example, the value of the unauthorized order level data associated with the score data in the evaluation data shown in FIG. 5 is determined by the evaluation data generation device 18 based on result management data shown in FIG. 7. As shown in FIG. 7, the result management data includes, for example, an order ID, score data, and result data.

In this embodiment, for example, the result management data associated with the order data is generated by the unauthorized order determination device 12. The order ID of the order data is set as the order ID included in the result management data. As the value of the score data included in the result management data, the score value associated with the order data is set. As the value of the result data included in the result management data, a value indicating the determination result as to whether or not the order associated with the order data is an unauthorized order is set. In this embodiment, for example, the value of the result data included in learning data including a certain order ID is the same as the value of the result data included in the result management data including the order ID.

In FIG. 7, there are shown result management data associated with learning data that the learned model has already learned, and result management data associated with learning data that the learned model has not learned yet. Specifically, for example, the result management data having an order ID of 0020001 or later are associated with learning data that has not yet been learned.

The evaluation data generation device 18 calculates, for example, a value by dividing the number of pieces of result management data in which the value of the score data is a specific score value (e.g., 700) and the value of the result data is 1 by the total number of pieces of result management data in which the value of the score data is that score value (e.g., 700). Then, the calculated value is expressed as a percentage, and that percentage value is set as the value of the unauthorized order level data associated with the score value in the evaluation data.

The calculation method of the value of the unauthorized order level data is not limited to the above-mentionedmethod. For example, the evaluation data generation device 18 may calculate the value by dividing the number of pieces of result management data in which the value of the score data is a specific score value (e.g., 700) or more and the value of the result data is 1 by the total number of pieces of result management data in which the value of the score data is that score value (e.g., 700) or more. Further, for example, the evaluation data generation device 18 may calculate the value by dividing the number of pieces of result management data in which the value of the score data is a specific score value (e.g., 700) or less and the value of the result data is 1 by the total number of pieces of result management data in which the value of the score data is that score value (e.g., 700) or less. Then, the calculated value may be set as the value of the unauthorized order level data associated with the score value in the evaluation data.

As described above, the result management data shown in FIG. 7 includes result management data associated with learning data that the learned model to be used to determine the score value has already learned and result management data associated with learning data that the learned model has not learned yet. Therefore, in this embodiment, in the calculation of the value of the unauthorized order level data, consideration is given to the value of result data associated with the learning data that has not yet been learned in the learned model.

The value of the unauthorized order level data maybe calculated based only on result management data associated with learning data that has not yet been learned. The value of the unauthorized order level data may also be calculated based on result management data associated with learning data that has not yet been learned as well as result management data associated with learning data that has been learned.

The unauthorized order determination device 12 determines whether or not the target order data is an unauthorized order. In this embodiment, for example, as described below, the determination as to whether the order associated with the target order data is an unauthorized order is executed based on a three-step determination, that is, a list determination, a rule determination, and a level determination. In this embodiment, for example, the result data associated with the target order data is generated based on the result of the determination.

In this embodiment, for example, it is first determined whether or not the value (e.g., user ID) of an attribute of the target order data is included in a white list or a black list stored in the unauthorized order determination device 12 (list determination). The white list is, for example, a list of values of the attributes of the order data that have been determined to be orders that are not unauthorized. The black list is, for example, a list of values of the attributes of the order data that have been determined to be orders that are unauthorized. When the value of an attribute is determined to be included on the white list, result data, in which 0 is set as a value, associated with the target order data is generated. Moreover, when the value of an attribute is determined to be included on the black list, result data, in which 1 is set as a value, associated with the target order data is generated.

When it is determined that the attribute value (e.g., user ID) of the target order data is not included on the white list or the black list, it is then determined whether or not the target order data conforms to a rule relating to unauthorized orders determined in advance (rule determination). For example, when it is identified that orders from 100 or more different IP addresses have been generated from the same user within one hour, result data, in which 1 is set as a value, associated with the target order data may be generated.

In the rule determination, there may be a case in which the value of the result data associated with the target order data is not determined. In such a case, determination is performed based on the value of the unauthorized order level data included in the estimation result data associated with the target order data (level determination).

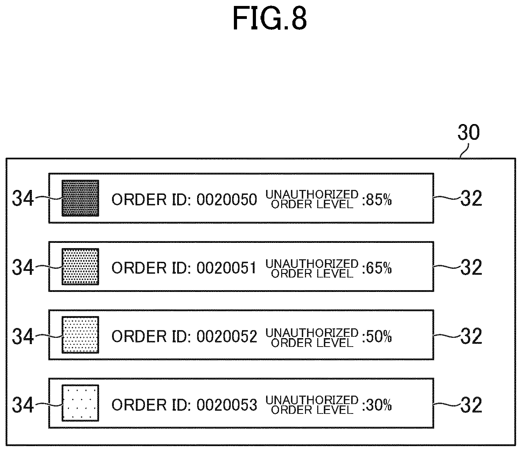

FIG. 8 is a diagram for illustrating an example of an unauthorized order confirmation screen 30 used for level determination. In this embodiment, for example, the unauthorized order confirmation screen 30 illustrated in FIG. 8 is generated in response to a request by the operator of the unauthorized order determination device 12, and is displayed on the display 12d of the unauthorized order determination device 12. In this embodiment, for example, with regard to order data for which the value of the associated result data is not determined even after list determination and rule determination, the value of the unauthorized order level data included in the estimation result data associated with the order data is referred to.

The unauthorized order confirmation screen 30 is then generated in which an order image 32 associated with each order data, for which the value of the associated result data is not determined even after list determination and rule determination, is arranged. Each order image 32 associated with the order data represents the order ID included in that piece of order data and the value of the unauthorized order level data associated with that order data, which is referred to as described above.

In each order image 32 associated with the order data, a confirmation requirement level image 34 in a mode corresponding to the value of the unauthorized order level data associated with the piece of order data is arranged. In this embodiment, for example, the level to be associated with the value of the unauthorized order level data is determined from among a plurality of levels. For example, when the value of the unauthorized order level data is from 80% to 100%, the level is determined to be 5. Similarly, when the value of the unauthorized order level data is from 60% to 80%, from 40% to 60%, from 20% to 40%, and from 0% to 20%, the level is determined to be 4, 3, 2, and 1, respectively. The confirmation requirement level image 34 in the mode corresponding to the determined level is arranged. For example, the confirmation requirement level image 34 having a color corresponding to the determined level may be arranged. For example, as the value of the level is higher, the color of the confirmation requirement level image 34 may be deeper. For example, as the value of the level is higher, the brightness of the confirmation requirement level image 34 may be darker.

Displaying such an unauthorized order confirmation screen 30 enables the operator of the unauthorized order determination device 12 to determine at a glance how carefully to check whether or not each order is an unauthorized order. The unauthorized order confirmation screen 30 can also be used as an index when the operator of the unauthorized order determination device 12 examines a priority for confirming whether or not an order is an unauthorized order.

For order data having a level value that is determined based on the value of the associated unauthorized order level and is equal to or less than a predetermined threshold value, the order image 32 associated with that order data may be controlled so as not to be arranged on the unauthorized order confirmation screen 30, and result data in which 0 is set as the value and which is associated with the order data may be generated. For example, when the above-described threshold value is 2, for order data having an associated unauthorized order level data value of 40% or less, the order image 32 associated with that order data may not be arranged on the unauthorized order confirmation screen 30. Then, result data in which 0 is set as the value and which is associated with the order data may be generated.

Further, for order data having a level value that is determined based on the value of the associated unauthorized order level data and is equal to or more than a predetermined threshold value, the order image 32 associated with that order data may be controlled so as not to be arranged on the unauthorized order confirmation screen 30, and result data in which 1 is set as the value and which is associated with the order data may be generated. For example, when the above-described threshold value is 4, for order data having an associated unauthorized order level data value of 60% or more, the order image 32 associated with that order data may not be arranged on the unauthorized order confirmation screen 30. Then, result data in which 1 is set as the value and which is associated with the order data may be generated.

The above-mentioned threshold value may be changed at a predetermined timing or at a predetermined time interval.

The operator confirms whether or not the order is an unauthorized order by checking personal information on the user who performed the order corresponding to the order image 32, and inputs the value indicating the result by using the operation interface 12e. In this embodiment, the result data associated with the order data in which a value input in this manner is set is generated.

Then, the result data associated with the target order data, which is associated with the order ID of the target order data, is transmitted from the unauthorized order determination device 12 to the electronic commerce system 10 (refer to Step (7) of FIG. 2) .

The electronic commerce system 10 executes predetermined processing based on the result data transmitted in this way. For example, when the value of the result data associated with the target order data is 0, the electronic commerce system 10 may proceed with the order processing for the order associated with the target order data as a valid order. As another example, when the value of the result data associated with the target order data is 1, the electronic commerce system 10 may stop the order associated with the target order data.

Shipping of the ordered product and the like is usually performed within one business day, and therefore in order to prevent deterioration in usability, it is desired that the value of the result data be set within one day from the occurrence of the order.

The unauthorized order determination device 12 also generates result management data associated with the target order data based on the result data associated with the target order data. For example, as described above, the order ID of the target order data is set as the order ID included in the result management data. As the value of the score data included in the result management data, the score value associated with the target order data is set. As the value of the result data included in the result management data, the value of the result data associated with the target order data is set.

The result management data generated in this way and associated with the target order data is transmitted from the unauthorized order determination device 12 to the evaluation data generation device 18 (refer to Step (8) of FIG. 2) . The evaluation data generation device 18 stores the result management data received from the unauthorized order determination device 12. In this way, the result data associated with the target order data is used for subsequent generation of evaluation data.

The evaluation data generation device 18 also transmits the result management data associated with the target order data, which is associated with the order ID of the target order data, to the learning data management device 20 (refer to Step (9) of FIG. 2) .

The evaluation data generation device 18 generates evaluation data based on the stored result management data. The evaluation data generation device 18 may generate the evaluation data at predetermined time intervals. Otherwise, the evaluation data generation device 18 may generate evaluation data each time new result management data is stored, or each time a predetermined number of pieces of new result management data are stored.

The evaluation data generation device 18 transmits the generated evaluation data to the unauthorized order determination device 12 (refer to Step (10) of FIG. 2). The unauthorized order determination device 12 updates the stored evaluation data to the received evaluation data. After the evaluation data is updated, estimation result data is generated based on the updated evaluation data.

The learning data management device 20 generates learning data based on the feature vector (refer to Step (4) of FIG. 2) received from the feature extraction device 14 and result management data (refer to Step (9) of FIG. 2) received from the evaluation data generation device 18 and stores those pieces of data. For example, learning data associated with the target order data is generated based on the feature vector associated with the target order data and the result management data associated with the target order data. For example, learning data including the order ID, the feature vector associated with the order ID, and result management data associated with the order ID may be generated.

The generated learning data is transmitted from the learning data management device 20 to the model generation device 22 (refer to Step (11) of FIG. 2).

The model generation device 22 executes the learning of the machine learning model using the learning data received from the learning data management device 20. For example, when all the pieces of learning data corresponding to a predetermined period (e.g., one month) have been received, the learning of a machine learning model using that learning data may be executed.

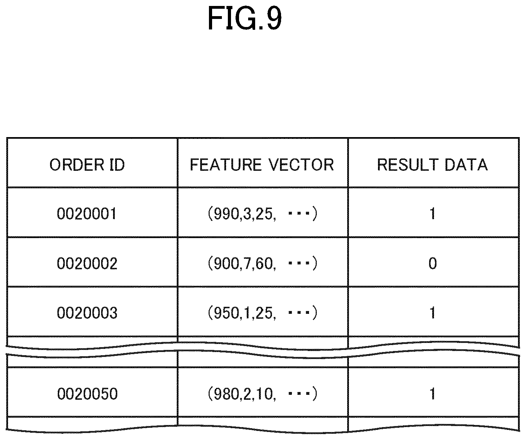

For example, the learning data shown in FIG. 4 is learning data corresponding to a first period. In FIG. 9, there is shown learning data corresponding to a second period, which is a period next to the first period. The learning data shown in FIG. 9 is learning data in which the machine learning model has not yet been learned and the order ID is 0020001 or later. Among the learning data corresponding to the second period, learning data associated with the target order data having the order ID 0020050 is also included.

For example, when all the pieces of learning data corresponding to the second period have been received, the model generation device 22 may execute the learning of the machine learning model using the learning data shown in FIG. 9. In this way, the learning data that has not yet been learned shown in FIG. 9 is also reflected in the learned model. A machine learning model in which the learning data corresponding to the first period has been learned may further learn the learning data corresponding to the second period. Amachine learning model in a predetermined initial state may further learn the learning data corresponding to the second period regardless of whether or not the machine learning model has learned the learning data corresponding to the first period.

The model generation device 22 determines the determination validity of the machine learning model that is in operation on the score value determination device 16 and that is being used to estimate the possibility that an order is an unauthorized order. The processing of determining the determination validity of the machine learning model in operation is described later.

When it is determined that the machine learning model in operation is not valid, the model generation device 22 transmits to the model storage device 24 a machine learning model that has executed learning (refer to FIG. 2 (12)).

The score value determination device 16 monitors whether or not a new machine learning model is stored in the model storage device 24. When the score value determination device 16 detects that a new machine learning model is stored in the model storage device 24, the score value determination device 16 acquires the new machine learning model from the model storage device 24 (refer to FIG. 2 (13)). The score value determination device 16 then changes the machine learning model in operation.

The processing of determining the determination validity of the machine learning model in operation is now described.

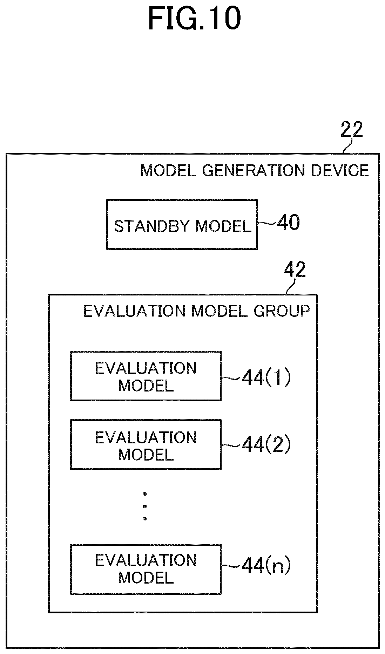

FIG. 10 is a diagram for illustrating an example of a structure of a machine learning model stored in the model generation device 22 in an embodiment of the present invention. As illustrated in FIG. 10, in the model generation device 22 of this embodiment, a standby model 40 and an evaluation model group 42 including n evaluation models 44 (evaluation model 44(1) to evaluation model 44(n)) are stored.

In this embodiment, for example, the learning of the standby model 40 is executed based on learning data received by the model generation device 22 from the learning data management device 20. In the learning of the standby model 40, for example, a feature vector included in the learning data is used as input data to be input to the standby model 40. Further, result data included in the learning data is used as teacher data to be compared with the output from the standby model 40.

In this embodiment, learning of the evaluation model 44 is also executed based on the learning data. In the learning of the evaluation model 44, for example, among the plurality of elements included in the feature vector included in the learning data, a part of the plurality of elements associated with the evaluation model 44 is used as input data to be input to the evaluation model 44. The result data included in the learning data is also used as teacher data to be compared with the output of the evaluation models 44.

A part of the plurality of elements included in the feature vector is input to each of the evaluation model 44(1) to evaluation model 44 (n) . Each of those parts is different from the others. The number of elements input to the evaluationmodels 44 and which elements are input to the evaluation models 44 are determined in advance for each evaluation model 44. It is also acceptable for a feature vector (feature amount) having only one element to be input to the evaluation models 44.

The feature vector (or feature amount) input to the evaluation models 44 is hereinafter referred to as subset data.

In this embodiment, for example, the determination validity of the machine learning model operating on the score value determination device 16 is determined based on the output of the evaluation model 44 after execution of the above-mentioned learning for each evaluation model 44 (1) to evaluation model 44 (n) . The subset data input to the evaluation model 44 at the time of determination may be the subset data input at the time of the learning of the evaluation model 44 or may be different from the subset data input at the time of the learning of the evaluation model 44.

For example, the determination validity of the machine learning model in operation may be determined based on a difference between the output of the standby model 40 after execution of learning and the output produced when a part of the inputs to the standby model 40 is input to the evaluation model 44 after execution of learning.

For example, it may be identified whether or not a result of determination regarding whether the score value indicated by the output produced when a certain feature vector is input to the standby model 40 is equal to or more than a predetermined value and a result of determination regarding whether the score value indicated by the output produced when a part of the feature vector is input to the evaluation model 44 is equal to or more than a predetermined value are different from each other. When those results of determination are different, it may be determined that the machine learning model in operation is not valid.

As another example, a difference may be identified between the score value indicated by the output produced when a certain feature vector is input to the standby model 40 and the score value indicated by the output produced when a part of the feature vector is input to the evaluation model 44. When the value indicating the difference is equal to or more than a predetermined value, it may be determined that the machine learning model in operation is not valid.

As another example, the determination validity of the machine learning model in operation may be determined based on a difference between the output of the evaluation model 44 before execution of learning and the output of the evaluation model 44 after execution of learning. For example, a difference may be identified between the score value indicated by the output produced when certain subset data is input to the evaluation model 44 before execution of learning and the score value indicated by the output produced when that subset data is input to the evaluation model 44 after execution of learning. When the value indicating the difference is equal to or more than a predetermined value, it may be determined that the machine learning model in operation is not valid. As yet another example, the determination validity of the machine learning model in operation may be determined based on a difference between a distribution of the outputs produced when a data group determined in advance is input to the evaluation model 44 before execution of learning and a distribution of the outputs produced when that data group is input to the evaluation model 44 after execution of learning.

When it is determined that the machine learning model in operation is not valid, for example, the standby model 40 is transmitted to the model storage device 24 as described above.

The score value determination device 16 detects that the standby model 40 has been stored in the model storage device 24 as described above, and acquires the standby model 40 from the model storage device 24. The machine learning model in operation is hereinafter referred to as an old model, and the standby model 40 acquired from the model storage device 24 is hereinafter referred to as a new model. For example, when the new model is obtained from the model storage device 24, the score value determination device 16 changes the learned model used to determine the score value from the old model to the new model.

It is not required to change the machine learning model in operation from the old model to the new model. For example, the score value corresponding to new input data may be determined based on the output produced when the plurality of elements included in the new input data are input to any one of the old model and the new model to be determined in accordance with the new input data.

For example, it is assumed that the machine learning model in operation is determined as not being valid based on the output produced when the subset data is input to a certain evaluation model 44. In this case, when the subset data is included in the new input data, the score value may be determined based on the output produced when the subset data is input to the new model. As another example, when the subset data is not included in the new input data, the score value may be determined based on the output produced when the subset data is input to the old model.

As yet another example, a strength of a trend in the output of the evaluation model 44 may be identified.

For example, a difference may be identified between the score value indicated by the output produced when, for a plurality of feature vectors different from each other, those feature vectors are input to the standby model 40 and the score value indicated by the output produced when the subset data, which is a part of those feature vectors, is input to the evaluation model 44. A representative value such as a maximum value or an average value of the difference identified for the plurality of feature vectors may be used as a value indicating the strength of the trend.

As another example, a score value indicated by the output produced when the subset data, which is a part of the feature vectors, is input to the evaluation model 44 may be identified for a plurality of pieces of subset data different from each other. A representative value such as a maximum value or an average value of the score value identified for the plurality of pieces of subset data may be used as the value indicating the strength of the trend.

As the score value, a value obtained by adding a weighting corresponding to the above-mentioned strength of the trend to the value indicating the output produced when new input data is input to the new model and the value indicating the output produced when the new input data is input to the old model may also be used. For example, as the value indicating the strength of the trend is larger, the weighting on the value indicating the output produced when the new input data is input to the new model may be higher.

For example, when it is determined that the machine learning model in operation is not valid based on the output of a certain evaluation model 44, the evaluation model 44 to which a predetermined element that is unlikely to cause a trend has been input may be transmitted to the model storage device 24 as a new machine learning model. Such an evaluation model 44 is hereinafter referred to as an alternative evaluation model. The score value determination device 16 may use the alternative evaluation model as a new machine learning model to calculate the score value based on new input data.

Examples of the elements to be input to the alternative evaluation model may include data indicating a degree of difference from a purchase price and a purchase quantity between a general purchaser and the relevant purchaser and data indicating a degree of difference from the purchase price and the purchase quantity for the relevant purchaser between a normal access and the access this time. The evaluation model 44 in which a remainder obtained by excluding the subset data from the feature vector input to the standby model 40 is input may also be used as an alternative evaluation model.

In this case, when a situation in which the above-mentioned strength of the trend is stronger than the predetermined strength has continued for a predetermined time period, the machine learning model in operation may be changed from the alternative evaluation model to the above-mentioned new model. Further, when a situation in which the above-mentioned strength of the trend is weaker than a predetermined strength has continued for a predetermined time period, the machine learning model in operation may be changed from the alternative evaluation model to the old model.

For example, until it is determined that the machine learning model in operation is not valid based on the output of the evaluation models 44, the possibility that the order is an unauthorized order may be estimated based on the score value without using the unauthorized order level data. When it is determined that the machine learning model in operation is not valid, the possibility that the order is an unauthorized order may be estimated by using the unauthorized order level data until the machine learning model in operation is changed from the old model to the new model.

In the unauthorized order determination system 1 according to this embodiment, the latest trends regarding unauthorized orders are not reflected in the machine learning model in operation, and hence the determination validity of the machine learning model may decrease. Therefore, it is desired that the determination validity of the machine learning model in operation be determined in a timely manner so that the decrease in the determination validity can be handled in some way at an appropriate time.

It is conceivable to determine the determination validity of the machine learning model in operation based on the output of the standby model 40 that has executed learning using new learning data. For example, when there is a difference in output tendency between the machine learning model in operation and the standby model 40, it may be determined that the determination validity of the machine learning model in operation has decreased.

However, when the number of elements of the feature vector input to the standby model 40 is large, the output response to a trend generated for a small number of elements is sluggish, and it may not be possible to determine the determination validity of the machine learning model in operation in a timely manner based on the output of the standby model 40.

Therefore, in this embodiment, as described above, the determination validity of the machine learning model in operation can be determined based on the output of the evaluation model 44 having a smaller number of input elements than that of the standby model 40. As a result, in this embodiment, the determination validity of the machine learning model in operation can be determined in a timely manner.

Further, in the unauthorized order determination system 1 according to this embodiment, the value of the unauthorized order level data is determined based on the evaluation data described above and a score value in which consideration is not given to the values of input data not input for learning of a learned model. The evaluation data is data in which consideration is given to the value of input data not input for learning of a learned model, and as a result, the value of the unauthorized order level data is also data in which consideration is given to the value of input data not input for learning of a learned model. In the unauthorized order determination system 1 according to this embodiment, an estimation of the possibility that an order is an unauthorized order is performed based on estimation result data including unauthorized order level data in which consideration is given to the value of input data not input for learning of a learned model.

In the unauthorized order determination system 1 according to this embodiment, in order to reflect the latest trends in unauthorized use, it is desired that the machine learning model be updated in real time. However, a machine learning model may not always be updated in real time. For example, when it is required to manually input training data, or when learning data is learned by a machine learning model after being manually confirmed, the machine learning model is inevitably not updated in real time.

When there is a time lag between the learning of the machine learning model and the estimation using the machine learning model as in this case, an order that is actually an unauthorized order may be estimated as not being an unauthorized order, or an order that is not an unauthorized order may be estimated as being an unauthorized order. For example, an attribute of an order that has a low possibility of being an unauthorized order during learning may be an attribute of an order that has a high possibility of being an unauthorized order when the situation changes.

As another example, when a machine learning model that has learned orders from a certain region is used to estimate the possibility that orders from another region are unauthorized orders, the tendency of orders having a high possibility of being an unauthorized order and the meaning represented by the same score value may be different from region to region.

As described above, in the unauthorized order determination system 1 according to this embodiment, an estimation is performed based on data reflecting the value of input data not input for learning of a learned model. Therefore, with the unauthorized order determination system 1 according to this embodiment, it is possible to adapt to a difference, like the differences described above, between a situation during learning of a machine learning model and a situation during estimation using that machine learning model.

For example, a large number of orders may be transmitted to the electronic commerce system 10 without interruption for 24 hours. In such a case, the processing ability of the unauthorized order determination system 1 may not be sufficient, and it may be difficult to estimate the possibility that an order is an unauthorized order using the machine learning model while also performing learning of the machine learning model in real time. With the unauthorized order determination system 1 according to this embodiment, even in such a case, the possibility that an order is an unauthorized order can be estimated for each of a large number of orders without interruption in the electronic commerce system 10 for 24 hours.

With the unauthorized order determination system 1 according to this embodiment, even in cases where the learned machine learning model is used in various regions, evaluation of the possibility that an order is an unauthorized order can be performed in an unified manner based on a unified standard of the value of unauthorized order level data.

The present invention is not limited to the estimation of whether or not the possibility that an order is an unauthorized order, and is generally applicable to cases in which estimation is performed using a machine learning model.

The evaluation data is not limited to that shown in FIG. 5. For example, the unauthorized order determination device 12 may transmit the score value associated with the target order data to the evaluation data generation device 18. Then, in response to reception of the score value, the evaluation data generation device 18 may calculate the value of the unauthorized order level data associated with that score value based on the stored result management data. Then, the evaluation data generation device 18 may transmit to the unauthorized order determination device 12 evaluation data including the received score value and the unauthorized order level data for which a value has been calculated. Then, the unauthorized order determination device 12 may generate estimation result data including the order ID of the target order data and the value of the unauthorized order level data included in the received evaluation data. In this way, the evaluation data of the score value may be generated in accordance with the determination of the score value associated with the target order data.

For example, the evaluation data may indicate the range of a score value associated with the unauthorized level, or a threshold value for score values having a different unauthorized level.

For example, the range of a score value obtained by dividing the number of pieces of result management data in which the value of the result data is 1 by the total number of pieces of result management data may be identified as a first range, which is from 0% to 20%, a second range, which is from 20% to 40%, a third range, which is from 40% to 60%, a fourth range, which is from 60% to 80%, or a fifth range, which is from 80% to 100%. Evaluation data indicating one of the first range to the fifth range may be generated. For example, there is assumed a case in which a value obtained by dividing the number of pieces of result management data having a score value of 420 and a result data value of 1 by the total number of pieces of result management data having a score value of 420 is 0.6 (60%), and in which a value obtained by dividing the number of pieces of result management data having a score value of 680 and a result data value of 1 by the total number of pieces of result management data having a score value of 680 is 0.8 (80%) . In this case, evaluation data in which values of 420 or more and 680 or less are shown as the values of the fourth range may be generated.

In this case, for example, when the score value determined for the target order data is in the first range, estimation result data may be generated in association with target order data in which 1 is set as the value of the unauthorized order level data. Similarly, when the determined score value is the second range, the third range, the fourth range, or the fifth range, estimation result data may be generated in association with target order data in which 2, 3, 4, or 5 is set as the value of the unauthorized order level data.

Further, for example, the score value obtained by dividing the number of pieces of result management data in which the value of the result data is 1 by the total number of pieces of result management data may be identified as a first threshold value, which is 20%, a second threshold value, which is 40%, a third threshold value, which is 60%, or a fourth threshold value, which is 80%. Evaluation data indicating one of the first threshold value to the fourth threshold value may be generated. For example, there is assumed a case in which a value obtained by dividing the number of pieces of result management data having a score value of 420 and a result data value of 1 by the total number of result management data having a score value of 420 is 0.6 (60%), and in which a value obtained by dividing the number of pieces of result management data having a score value of 680 and a result data value of 1 by the total number of pieces of result management data having a score value of 680 is 0.8 (80%). In this case, evaluation data may be generated in which 420 is shown as the third threshold value and 680 is shown as the fourth threshold value.

In this case, for example, when the score value determined for the target order data is less than the first threshold value, estimation result data may be generated in association with target order data in which 1 is set as the value of the unauthorized order level data. Similarly, when the determined score value is more than the first threshold value, the second threshold value, the third threshold value, or the fourth threshold value, estimation result data may be generated in association with target order data in which 2, 3, 4, or 5 is set as the value of the unauthorized order level data.

The unauthorized order confirmation screen 30 may be displayed including the order image 32 in which the confirmation requirement level image 34 corresponding to the value of the unauthorized order level data is arranged.

The value of the result data is not required to be set to any one of the two values of 1 or 0. The value of the result data may be set to any one of multiple values from 0 to 9, for example. In this case, the estimation result data may be data indicating a distribution of the possibility that the value of the result data is the value of each of those multiple values. As another example, the value of the result data may be a real number. In this case, the estimation result data may be data indicating a possibility distribution, for example, a probability density function.

In the above description, there is described a case in which, before determining whether or not an order is an unauthorized order, for all order data, the score value associated with each order data is determined and estimation result data including unauthorized order level data associated with the order data is generated. However, it is not required to determine the score value associated with the order data for all the order data before determining whether or not an order is an unauthorized order. It is also not required to generate the estimation result data including unauthorized order level data associated with the order data for all the order data before determining whether or not an order is an unauthorized order.

For example, the score value determination device 16 may determine the score value associated with the order data only for the order data for which the value of the associated result data has not been determined in the list determination or the rule determination. The evaluation data generation device 18 may also generate the estimation result data associated with the order data only for the order data for which the value of the associated result data has not been determined in the list determination or the rule determination.

For example, when the score value associated with the order data is equal to or less than a predetermined value (e.g., 50 or less), estimation result data associated with the order data may not be generated. In this case, result data may be generated in which 0 is set as a value and which is associated with the order data. For example, when the score value associated with the order data is equal to or more than a predetermined value (e.g., 950 or more), estimation result data associated with the order data may not be generated. In this case, result data may be generated in which 1 is set as a value and which is associated with the order data.

It is also not required to execute the determination of whether or not the order associated with the target order data is an unauthorized order based on the three-step determination of list determination, rule determination, and level determination. For example, the determination of whether or not the order associated with the target order data is an unauthorized order may be executed based on a two-step determination of list determination and rule determination, list determination and level determination, or rule determination and level determination. As another example, the determination of whether or not the order associated with the target order data is an unauthorized order may be performed based on only one of list determination, rule determination, and level determination. The determination of whether or not the order associated with the target order data is an unauthorized order may also include a determination based on a method other than list determination, rule determination, and level determination.

The functions of the model generation device 22 and the score value determination device 16 of this embodiment and the processing to be executed by the model generation device 22 of this embodiment are now described further while focusing on the determination of the determination validity of the machine learning model in operation.

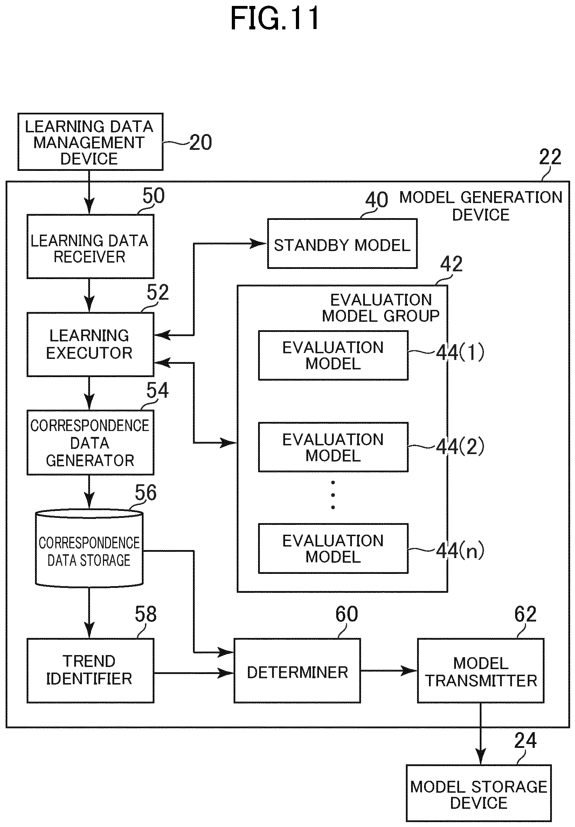

FIG. 11 is a functional block diagram for illustrating an example of the functions to be implemented by the model generation device 22 of this embodiment. It is not required for all the functions illustrated in FIG. 11 to be implemented by the model generation device 22 of this embodiment, and functions other than the functions illustrated in FIG. 11 may also be implemented.

As illustrated in FIG. 11, the model generation device 22 of this embodiment includes, in terms of its functions, for example, a standby model 40, an evaluation model group 42 including an evaluation model 44(1) to an evaluation model 44(n), a learning data receiver 50, a learning executor 52, a correspondence data generator 54, a correspondence data storage 56, a trend identifier 58, a determiner 60, and a model transmitter 62.

The standby model 40, the evaluation model group 42 including the evaluation model 44(1) to evaluation model 44(n), and the corresponding data storage 56 are mainly implemented by the storage 22b. The learning data receiver 50 and the model transmitter 62 are mainly implemented by the communicator 22c. The learning executor 52, the correspondence data generator 54, the trend identifier 58, and the determiner 60 are mainly implemented by the processor 22a.

The above-mentioned functions may also be implemented by the processor 22a executing a program including commands corresponding to the functions, which is installed in the model generation device 22 being a computer. The program may be supplied to the model generation device 22 via, for example, a computer-readable information storage medium such as an optical disc, a magnetic disk, a magnetic tape, and a magneto-optical disk, or the Internet.

In this embodiment, for example, the standby model 40 is a machine learning model to which a plurality of elements included in input data on which estimation processing is to be performed are input, and which produces output corresponding to the input. The standby model 40 may output, for example, a score value.

In this embodiment, for example, the evaluation model 44(1) to evaluation model 44(n) included in the evaluation model group 42 are machine learning models to which, among the plurality of elements included in the input data on which estimation processing is to be performed, parts different from each other are input, and which produces output corresponding to the input. The evaluation models 44 may output, for example, a score value.

In this embodiment, for example, the learning data receiver 50 is configured to receive learning data from the learning data management device 20.

In this embodiment, for example, the learning executor 52 is configured to execute learning of the standby model 40 based on the plurality of elements included in the input data on which estimation processing is to be performed and known result data of the input data. In learning of the standby model 40, a plurality of elements included in a feature vector of the learning data received by the learning data receiver 50 may be used as the input data to be input to the standby model 40. Further, the result data included in the learning data may be used as teacher data to be compared with the output from the standby model 40.

In this embodiment, for example, the learning executor 52 is configured to execute learning of the evaluation models 44 based on the subset data, which is a part of the plurality of elements included in the input data on which estimation processing is to be performed, and known result data of the input data. In the learning of the evaluation model 44, subset data, which is, among the plurality of elements included in the feature data of the learning data received by the learning data receiver 50, a part of the elements associated with that evaluation model, may be used as the input data to be input to the evaluation model 44. Further, the result data included in the learning data may be used as teacher data to be compared with the output of the evaluation model 44.

The learning executor 52 may execute learning of a plurality of evaluation models 44 (evaluation model 44(1) to evaluation model 44(n)). In the learning of the evaluation model 44(1) to evaluation model 44(n), subset data, which is each a different part among the plurality of elements included in the feature vector of the learning data, may be input to each evaluation model 44(1) to evaluation model 44(n). In the learning of any of the evaluation model 44(1) to evaluation model 44 (n), the result data included in the learning data may be used as teacher data to be compared with the output of the evaluation model 44.

In this embodiment, for example, the correspondence data generator 54 is configured to generate correspondence data indicating a correspondence between the input and the output of the standby model 40 and the evaluation model 44 after execution of learning by the learning executor 52. The correspondence data generator 54 stores the generated correspondence data in the correspondence data storage 56.

The correspondence data generator 54 may also input various data to the standby model 40 and the evaluation model 44 after execution of learning, and generate correspondence data indicating the correspondence between the input data and the output corresponding to the input data. The data to be input to the standby model 40 or the evaluation model 44 may be the data input during learning or may be different from the data input during learning.

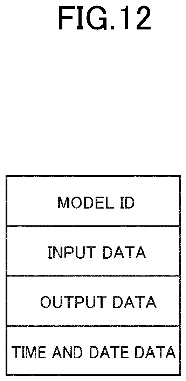

FIG. 12 is a diagram for illustrating an example of a data structure of the correspondence data. As illustrated in FIG. 12, the correspondence data includes, for example, a model ID that is identification information on a machine learning model, input data indicating the input to the machine learning model, output data indicating the output corresponding to the input, and date and time data indicating a generation date and time of the correspondence data. The output data may be, for example, data indicating the above-mentioned score value. Further, for example, learning by the learning executor 52 and generation of a plurality of pieces of correspondence data by the correspondence data generator 54 may be alternately performed. In this case, date and time data having the same value may be set in the plurality of pieces of correspondence data generated by the generation processing of the correspondence data executed in response to execution of learning by the learning executor 52.

In this embodiment, for example, the correspondence data storage 56 is configured to store the correspondence data generated by the correspondence data generator 54.

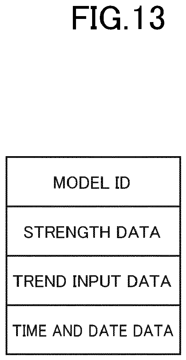

In this embodiment, for example, the trend identifier 58 is configured to identify the strength of the trend in the output of the evaluation model 44. The trend identifier 58 may generate trend data indicating the strength of the trend and store the trend data in the correspondence data storage 56. The trend identifier 58 may also generate trend data associated with the correspondence data and store the trend data in the correspondence data storage 56. FIG. 13 is a diagram for illustrating an example of the data structure of the trenddata. As illustrated in FIG. 13, the trend data includes, for example, a model ID that is identification information on a machine learning model, strength data indicating the strength of a trend in the machine learning model, and trend input data indicating an input that contributed to the strength of the trend, and date and time data indicating a date and time.

For example, one piece of trend data may be generated based on a plurality of pieces of correspondence data including a certain model ID and the date and time data of a certain value. For example, it is assumed that the trend data is generated based on a certain plurality of pieces of correspondence data in which the model ID is "a" and the value of the date and time data is "b". In this case, "a" may be set as the model ID included in the generated trend data, and "b" may be set as the value of the date and time data included in the trend data.

Further, based on a certain plurality of pieces of correspondence data in which the value of the date and time data is "b", for a plurality of feature vectors different from each other, a difference may be identified between the score value indicated by the output of the standby model 40 and the score value indicated by the output of the evaluation model 44 having the model ID "a". For example, a difference may be identified between the score value indicated by the output produced when the plurality of elements included in a feature vector are input to the standby model 40 and the score value indicated by the output produced when subset data, which is a part of that plurality of elements, is input to the evaluation model 44 having the model ID "a". The maximum value of the differences identified for the plurality of feature vectors may be set as the value of the strength data included in the trend data. Further, the value of the subset data that is an input to the evaluation model 44 produced when the identified difference is the maximum value may be set as the value of the trend input data included in the trend data. In place of the maximum value of the differences identified for the plurality of feature vectors, a representative value other than the maximum value, such as the average value of the differences, may be set as the value of the strength data included in the trend data.

As another example, based on a certain plurality of pieces of correspondence data in which the value of the date and time data is "b", for a plurality of pieces of subset data different from each other, the score values indicated by the output produced when that plurality of pieces of subset data are input to the evaluation model 44 having the model ID "a" may be identified. The maximum value of the score values identified for the plurality of pieces of subset data may be set as the value of the strength data included in the trend data. Further, the value of the subset data that is an input to the evaluation model 44 produced when the identified difference is the maximum value may be set as the value of the trend input data included in the trend data including identification information on the relevant evaluation model 44 as the model ID. In place of the maximum value of the score values identified for the plurality of pieces of subset data, a representative value other than the maximum value, such as the average value of the score values, may be set as the value of the strength data included in the trend data.

In this embodiment, for example, the determiner 60 is configured to determine the determination validity of the machine learning model in operation based on the output of the evaluation model 44 after execution of learning.

The determiner 60 may determine the determination validity of the machine learning model in operation based on the output of the evaluation model 44 for each of the evaluation model 44(1) to evaluation model 44(n). When there exists an evaluation model 44 that served as the basis for a determination that the machine learning model in operation is not valid, the determiner 60 may determine that evaluation model 44 to be a contribution evaluation model, and determine the input of that evaluation model 44 to be a contributing element.

For example, the determiner 60 may determine the determination validity of the machine learning model in operation based on a difference between the output of the standby model 40 after execution of learning and the output of an evaluation model 44 produced when a part of the inputs to the standby model 40 is input to the evaluation model 44.

In this case, the determiner 60 may identify, for example, a value v1 indicating whether or not the score value indicated by the output produced when a certain feature vector is input to the standby model 40 is equal to or more than a predetermined value. The determiner 60 may also identify a value v2 indicating whether or not the score value indicated by the output produced when a part of the feature vector is input to the evaluation model 44 is equal to or more than the predetermined value. When the value v1 and the value v2 are different from each other, it may be determined that the machine learning model in operation is not valid.

The values v1 and v2 maybe identified for a plurality of feature vectors different from each other. Further, the machine learning model in operation may be determined not to be valid when the number of times the values v1 and v2 are different from each other is equal to or more than a predetermined number, or when a value indicating a ratio of the number of times values v1 and v2 are different from each other to the total number of combinations of the values v1 and v2 is equal to or more than a predetermined value.

The determiner 60 may also identify, for example, a difference between the score value indicated by the output produced when a certain feature vector is input to the standby model 40 and the score value indicated by the output produced when a part of the feature vector is input to the evaluation model 44. When the value indicating the difference is equal to or more than a predetermined value, it may be determined that the machine learning model in operation is not valid. Inthiscase, the above-mentioneddif ference may be identified for a plurality of feature vectors different from each other . The machine learning model in operation may be determined not to be valid when the number of times that the value indicating the difference is equal to or more than the predetermined value is equal to or more than a predetermined number, or when a value indicating a ratio of the number of times that the value indicating the difference is equal to or more than a predetermined value to the total number of the values indicating the difference is equal to or more than a predetermined value.

The determiner 60 may also determine the determination validity of the machine learning model in operation based on a difference between the output of the evaluation model 44 before execution of learning and the output of the evaluation model 44 after execution of learning.

For example, the determiner 60 may identify a difference between the score value indicated by the output produced when certain subset data is input to the evaluation model 44 before execution of learning and the score value indicated by the output produced when the subset data is input to the evaluation model 44 after execution of learning. The determiner 60 may determine, when the value indicating the difference is equal to or more than a predetermined value, that the machine learning model in operation is not valid. As another example, the determiner 60 may identify a distribution of score values indicated by the output produced when a plurality of pieces of subset data are input to the evaluation model 44 before execution of learning and a distribution of score values indicated by the output produced when the plurality of pieces of subset data are input to the evaluation model 44 after execution of learning. The determiner 60 may determine, when a value representing a difference between the distributions is equal to or more than a predetermined value, that the machine learning model in operation is not valid.

The determiner 60 may also determine the determination validity of the machine learning model in operation based on the above-mentioned correspondence data or trend data. For example, when the value indicating the strength indicated by the strength data included in the latest trend data is equal to or more than a predetermined value, it may be determined that the machine learning model in operation is not valid.

In this embodiment, for example, the model transmitter 62 transmits a machine learning model stored in the model generation device 22 to the model storage device 24. The model transmitter 62 may transmit, for example, the standby model 40 to the model storage device 24. The model storage device 24 receives the machine learning model transmitted from the model generation device 22 and stores the machine learning model. When it is determined by the determiner 60 that the machine learning model in operation is not valid, the model transmitter 62 may transmit the machine learning model stored in the model generation device 22 to the model storage device 24.

The model transmitter 62 may transmit to the model storage device 24 the contribution evaluation model and contribution data representing the contributing element in association with the machine learning model.

The model transmitter 62 may transmit trend data to the score value determination device 16 in response to generation of the trend data regardless of whether or not the determiner 60 determines that the machine learning model in operation is not valid.

The model transmitter 62 may also transmit the above-mentioned alternative evaluation model to the model storage device 24.

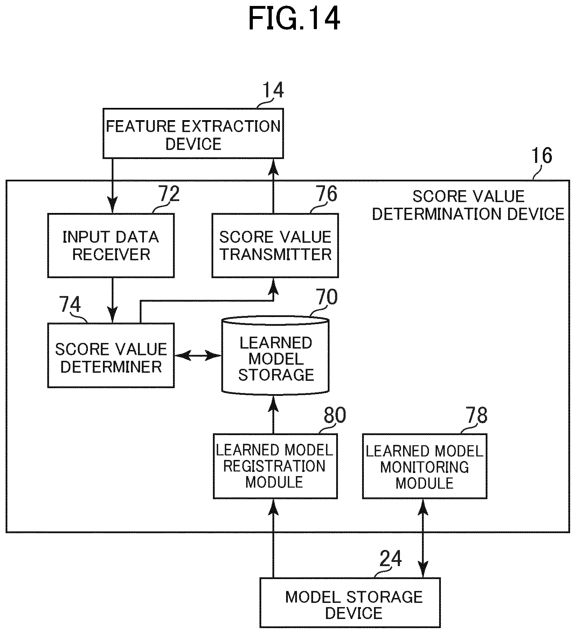

FIG. 14 is a functional block diagram for illustrating an example of the functions to be implemented by the score value determination device 16 of this embodiment. It is not required for all of the functions illustrated in FIG. 14 to be implemented by the score value determination device 16 of this embodiment, and functions other than those illustrated in FIG. 14 maybe implemented.

As illustrated in FIG. 14, the score value determination device 16 of this embodiment includes, in terms of its functions, for example, a learned model storage 70, an input data receiver 72, a score value determiner 74, a score value transmitter 76, a learned model monitoring module 78, and a learned model registration module 80.

The learned model storage 70 is implemented mainly by the storage 16b. The input data receiver 72 and the score value transmitter 76 are mainly implemented by the communicator 16c. The learned model monitoring module 78 and the learnedmodel registration module 80 are mainly implemented by the processor 16a and the communicator 16c. The score value determiner 74 is mainly implemented by the processor 16a.

The above-mentioned functions may also be implemented by the processor 16a executing a program including commands corresponding to the functions, which is installed in the score value determination device 16 being a computer. The program may be supplied to the score value determination device 16 via, for example, a computer-readable information storage medium such as an optical disc, a magnetic disk, a magnetic tape, and a magneto-optical disk, or the Internet.

In this embodiment, for example, the learned model storage 70 stores the machine learning model that is operated by the score value determination device 16 and that is to be used for the estimation relating to the input data to be estimated. In this embodiment, for example, the score value of the input data received by the input data receiver 72 is determined based on that machine learning model.

In this embodiment, for example, the input data receiver 72 is configured to receive input data from the feature extraction device 14. For example, in the example described above, the feature vector associated with the order data corresponds to the input data received by the input data receiver 72.

In this embodiment, for example, the score value determiner 74 is configured to determine the score value of the input data received by the input data receiver 72 based on the output produced when the input data is input to the machine learning model stored in the learned model storage 70.

In this embodiment, the unauthorized order determination device 12 executes the estimation processing relating to the input data, for example, the estimation processing relating to the possibility that the order associated with the input data is an unauthorized order, based on the determined score value.

In this embodiment, for example, the score value transmitter 76 is configured to transmit the score value of the input data determined by the score value determiner 74 to the feature extraction device 14. This score value is transmitted to the unauthorized order determination device 12 via the feature extraction device 14, for example.

In this embodiment, for example, the learned model monitoring module 78 is configured to monitor whether or not a new machine learning model is stored in the model storage device 24.

In this embodiment, for example, the learned model registration module 80 is configured to acquire, when it is detected that a new machine learning model is stored in the model storage device 24, the new machine learning model from the model storage device 24. The learned model registration module 80 then stores the acquired new machine learning model in the learned model storage 70.

The machine learning model in operation corresponds to the above-mentioned old model, and the standby model 40 newly stored in the learned model storage 70 by the learned model registration module 80 corresponds to the above-mentioned new model.

When a new model is newly stored in the learned model storage 70, the score value determiner 74 may change the machine learning model in operation from the old model to the new model. In this case, the unauthorized order determination device 12 executes the estimation processing relating to the new input data based on the output produced when a plurality of elements included in the new input data are input to the new model.

When a new model is newly stored in the learned model storage 70, the score value determiner 74 may determine a score value corresponding to the new input data based on the output produced when the plurality of elements included in the new input data are input to any one of the old model and the new model. It may be determined whether the above-mentioned plurality of elements are to be input to the old model or to be input to the new model in accordance with the new input data. In this case, the unauthorized order determination device 12 executes the estimation processing relating to the new input data based on the output produced when the plurality of elements included in the new input data are input to any one of the old model and the new model determined in accordance with the new input data.

For example, the score value determiner 74 may identify a contributing element indicated by the contribution data transmitted in association with the new model. When the contributing element is included in the new input data, the score value determiner 74 may determine the score value based on the output produced when the new input data is input to the new model. Further, when the contributing element is not included in the new input data, the score value determiner 74 may determine the score value based on the output produced when the new input data is input to the old model.

When a new model is newly stored in the learned model storage 70, the score value determiner 74 may determine the score value based on the strength of the trend. For example, the score value determiner 74 may use as the score value a value obtained by adding a weighting corresponding to the above-mentioned strength of the trend to a value indicating the output produced when the new input data is input to the new model and a value indicating the output produced when the new input data is input to the old model. In this case, the unauthorized order determination device 12 executes the estimation processing relating to the new input data based on the score value, which is a value obtained by adding a weighting corresponding to the strength of the trend.

In this case, for example, the score value determiner 74 may identify the strength of the trend indicated by the strength data included in the latest trend data including identification information on the contribution evaluation model in response to the reception of the trend data. The score value determiner 74 may use as the score value a value obtained by adding a weighting corresponding to the identified strength to a value indicating the output produced when the latest trend data is input to the new model and a value indicating the output produced when the latest trend data is input to the oldmodel. In this case, for example, the strength of the trend and the weighting may be associated with each other in advance, and the weighting may be uniquely determined based on the strength of the trend.

Further, for example, the score value determiner 74 may change the machine learning model in operation from the old model to the alternative evaluation model. In this case, the unauthorized order determination device 12 executes the estimation processing relating to the new input data based on the output produced when a part of the plurality of elements included in the new input data is input to the alternative evaluation model.

Now, assume it is identified based on the trend data that the strength of a trend indicated by strength data included in trend data including identification information on a contribution evaluation model as a model ID has indicated a value stronger than a predetermined strength continuously for a predetermined time period. For example, assume it is identified that, in the reception of trend data over a predetermined number of times, the strength of the trend indicated by the strength data included in the trend data including identification information on a contribution evaluation model as a model ID has indicated a value stronger than the predetermined strength continuously. In this case, the score value determiner 74 may change the machine learning model in operation from the alternative evaluation model to the new model.

Further, assume it is identified that a value indicating the above-mentioned strength of the trend indicates a value weaker than a predetermined strength continuously for a predetermined time period. For example, assume it is identified that, in the reception of trend data over a predetermined number of times, the strength of the trend indicated by the strength data included in the trend data including identification information on a contribution evaluation model as a model ID has continuously indicated a value weaker than the predetermined strength. In this case, the score value determiner 74 may change the machine learning model in operation from the alternative evaluation model to the old model.

Further, for example, as described above, the unauthorized order determination device 12 may estimate the possibility that the order is an unauthorized order based on the score value without using the unauthorized order level data until the machine learning model in operation is determined not to be valid. When it is determined that the machine learning model in operation is not valid, the model generation device 22 may transmit to the unauthorized order determination device 12 an instruction to change the estimation processing. Then, in response to receiving the change instruction, the unauthorized order determination device 12 may use the unauthorized order level data to estimate the possibility of an order being an unauthorized order until the machine learning model in operation is changed from the old model to the new model.

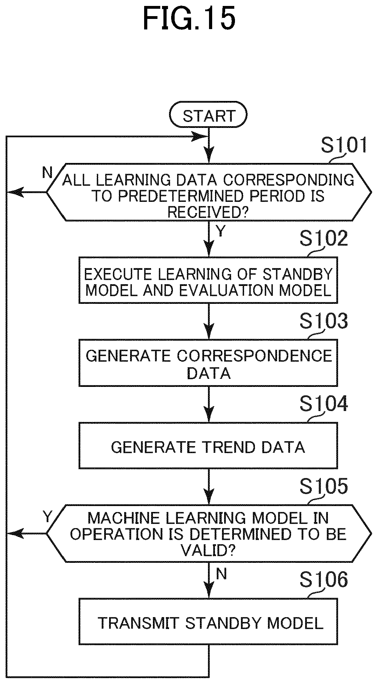

Now, a description is given of an example of the flow of processing to be executed by the model generation device 22 of this embodiment with reference to the flowchart illustrated in FIG. 15.

First, the learning executor 52 waits until all learning data corresponding to a predetermined period is received (Step S101) .

When it is confirmed that all the learning data corresponding to the predetermined period has been received, the learning executor 52 executes the learning of the standby model 40 and the evaluation model 44(1) to evaluation model 44(n) based on the learning data corresponding to the predetermined period (Step S102).

The correspondence data generator 54 inputs various pieces of data to the standby model 40 and the evaluation model 44(1) to evaluation model 44(n) to generate correspondence data indicating a correspondence between the inputs and the outputs corresponding to those inputs (Step S103). In this step, a plurality of pieces of correspondence data associated with the standby model 40 may be generated. Further, a plurality of pieces of correspondence data associated with one evaluation model 44 may be generated. Date and time data having the same value may be set in a plurality of pieces of correspondence data generated when the processing illustrated in Step S103 is performed once.

The trend identifier 58 generates trend data based on the correspondence data generated by the processing illustrated in Step S103 (Step S104). For example, trend data associated with each of the standby model 40 and the evaluation model 44(1) to evaluation model 44(n) may be generated.

The determiner 60 determines the determination validity of the machine learning model in operation based on the correspondence data generated in the processing illustrated in Step S103 (Step S105). For example, the determination validity of the machine learning model stored in the score value determination device 16 is determined. The determination validity may be determined based on trend data. For example, a determination validity of the machine learning model stored in the score value determination device 16 may be determined based on correspondence data including identification information on the relevant evaluation model 44 as a model ID for each evaluation model 44 (1) to evaluation model 44 (n) .

When it is determined that the machine learning model in operation is valid (Step S105: Y), the processing returns to the processing illustrated in Step S101.

When it is determined that the machine learning model in operation is not valid (Step S105: N), the model transmitter 62 transmits the standby model 40 to the model storage device 24 (Step S106), and the processing returns to the processing illustrated in Step S101. In this case, for example, the evaluation model 44 that served as the basis for the determination that the machine learning model in operation is not valid may be determined to be a contribution evaluation model, and an element input to that evaluation model 44 may be determined to be a contributing element. The model transmitter 62 may transmit the standby model 40, which is associated with the contribution evaluation model and the contribution data representing the contributing element, to the model storage device 24.

As described above, regardless of whether or not the machine learning model in operation is determined to be valid, after the processing illustrated in Step S105, the model transmitter 62 may transmit the trend data generated in the processing illustrated in Step S104 to the score value determination device 16.

In the processing illustrated in Step S106, the model transmitter 62 may also transmit an alternative evaluation model to the model storage device 24.

The standby model 40 and the evaluation model 44(1) to evaluation model 44 (n) may be reset to a predetermined initial state each time the processing returns to Step S101. However, it is not required to reset the standby model 40 and the evaluation model 44(1) to evaluation model 44(n) to a predetermined initial state when the processing illustrated in Step S101 to Step S106 is executed. For example, the standby model 40 and the evaluation model 44(1) to evaluation model 44(n) may additionally learn new learning data each time the execution timing of the processing illustrated in Step S102 arrives.

It should be noted that the present invention is not limited to the above-mentioned embodiment.

For example, a part or all of the functions to be implemented by the unauthorized order determination device 12, the feature extraction device 14, the score value determination device 16, the evaluation data generation device 18, the learning data management device 20, the model generation device 22, and the model storage device 24 may be implemented by one device. Further, the functions to be implemented by the unauthorized order determination device 12, the feature extraction device 14, the score value determination device 16, the evaluation data generation device 18, the learning data management device 20, the model generation device 22, or the model storage device 24 may be implemented by a plurality of devices .

Further, the specific character strings and numerical values described above and the specific numerical values and character strings in the drawings are merely exemplary, and the present invention is not limited to those character strings and numerical values.

## Claims

1. A determination system, comprising:
estimation processing execution means for executing estimation processing relating to the input data, based on an output produced when a plurality of elements included in input data, on which the estimation processing is to be performed, are input to a first machine learning model;
learning execution means for executing learning of a second machine learning model based on a part of the plurality of elements included in the input data and known result data of the input data; and
determining means for determining a determination validity of the first machine learning model based on an output of the second machine learning model after execution of the learning.

2. The determination system according to claim 1,
wherein the learning execution means is further configured to execute learning of a third machine learning model based on the plurality of elements included in the input data and the known result data of the input data, and
wherein the estimation processing execution means is configured to execute the estimation processing relating to new input data, when it is determined that the first machine learning model is not valid, based on an output produced when the plurality of elements included in the new input data are input to the third machine learning model after execution of the learning.

3. The determination system according to claim 1,
wherein the learning execution means is further configured to execute learning of a third machine learning model based on the plurality of elements included in the input data and the known result data of the input data, and
wherein the estimation processing execution means is configured to execute the estimation processing relating to new input data, when it is determined that the first machine learning model is not valid, based on an output produced when the plurality of elements included in the new input data are input to any one of the first machine learning model and the third machine learning model to be determined in accordance with the new input data.

4. The determination system according to claim 1, further comprising trend identification means for identifying a strength of a trend in the output of the second machine learning model,
wherein the learning execution means is further configured to execute learning of a third machine learning model based on the plurality of elements included in the input data and the known result data of the input data, and
wherein the estimation processing execution means is configured to execute the estimation processing relating to new input data, when it is determined that the first machine learning model is not valid, based on a value obtained by adding a weighting corresponding to the strength of the trend to a value indicating an output produced when the plurality of elements included in the new input data are input to the third machine learning model after execution of the learning and a value indicating an output produced when the plurality of elements are input to the first machine learning model.

5. The determination system according to any one of claims 2 to 4, wherein the determination means is configured to determine the determination validity of the first machine learning model based on a difference between an output of the third machine learning model after execution of the learning and an output of the second machine learning model produced when a part of the inputs to the third machine learning model is input to the second machine learning model.

6. The determination system according to claim 1, wherein the estimation processing execution means is configured to execute the estimation processing relating to new input data, when it is determined that the first machine learning model is not valid, based on an output produced when a part of the plurality of elements included in the new input data is input to a fourth machine learning model.

7. The determination system according to any one of claims 1 to 6, wherein the determination means is configured to determine the determination validity of the first machine learning model based on a difference between an output of the second machine learning model before execution of the learning and an output of the second machine learning model after execution of the learning.

8. A determination method, comprising the steps of:
executing estimation processing relating to the input data, based on an output produced when a plurality of elements included in input data on which the estimation processing is to be performed are input to a first machine learning model;
executing learning of a second machine learning model based on a part of the plurality of elements included in the input data and known result data of the input data; and
determining a determination validity of the first machine learning model based on an output of the second machine learning model after execution of the learning.

9. A program for causing a computer to execute the procedures of:
executing estimation processing relating to the input data, based on an output produced when a plurality of elements included in input data on which the estimation processing is to be performed are input to a first machine learning model;
executing learning of a second machine learning model based on a part of the plurality of elements included in the input data and known result data of the input data; and
determining a determination validity of the first machine learning model based on an output of the second machine learning model after execution of the learning.
